# EUROPÄISCHE PATENTSCHRIFT

(11) **EP 3 638 530 B1**
(45) Veröffentlichungstag und Bekanntmachung des Hinweises auf die Patenterteilung: **06.01.2021**
(21) Anmeldenummer: 18730655.0
(22) Anmeldetag: 24.05.2018
(51) Int. Cl.: B60K 7/00, B60K 17/04

(54) **ACHSENDANORDNUNG**
AXLE END ARRANGEMENT
ARRANGEMENT D'EXTRÉMITÉ D'ESSIEU

(30) Priorität: 16.06.2017 DE 102017113291
(43) Veröffentlichungstag der Anmeldung: 22.04.2020
(73) Patentinhaber: SAF-HOLLAND GmbH, 63856 Bessenbach (DE)
(72) Erfinder: DREWES, Olaf, 63743 Aschaffenburg (DE)
(74) Vertreter: Müller Schupfner & Partner Patent- und Rechtsanwaltspartnerschaft mbB
(86) Internationale Anmeldenummer: PCT/EP2018/063716
(87) Internationale Veröffentlichungsnummer: WO 2018/228800

(56) Entgegenhaltungen:
- DE-A1- 10 338 659
- DE-A1-102016 203 874
- US-A1- 2014 125 205

## Beschreibung

Die vorliegende Erfindung betrifft eine Achsendanordnung zum Einsatz in Nutzfahrzeugen.

Insbesondere bezieht sich der Begriff Achsendanordnung dabei auf ein System, welches im Bereich der drehbaren Lagerung eines Fahrzeugrades am Ende der Achse oder des Achsstummels des Fahrzeuges, vorzugsweise des Nutzfahrzeuges, installiert ist. Derartige Achsendanordnungen wurden im Stand der Technik bereits eingesetzt. So ist es beispielsweise bekannt, am Fahrzeugrad und in Verbindung mit dem Achsstummel stehend einen hydrostatischen Zusatzmotor anzuordnen. Auch das Anordnen eines Elektromotors im Achsendbereich wurde dabei bereits vorgeschlagen. Bei den aus dem Stand der Technik bekannten Achsendanordnungen hat es sich jedoch als problematisch gezeigt, dass deren Konstruktion sehr aufwendig ist. Weiterhin ist die Montage und insbesondere auch die Demontage der Achsendanordnungen im Stand der Technik stets problematisch, wobei oft die Achsendanordnung selbst zerlegt werden muss, um demontiert werden zu können, wobei Schmutz und Fremdkörper in den inneren Bereich der Achsendanordnung eindringen können. Weiterhin ist es für die Montage und Demontage von Achsendanordnungen im Stand der Technik oft erforderlich auch das Fahrzeugrad zu deinstallieren, wodurch ein erhöhter Montageaufwand entsteht.

US-2014/0125205 A1 zeigt eine Achsendanordnung zum Einsatz in Nutzfahrzeugen mit einer Statoreinheit und einer Rotoreinheit.

DE 103 38 659 A1 zeigt eine elektrische Antriebseinheit für ein Kraftfahrzeug mit einem Achsstummel, einem Elektromotor und einem Getriebe.

DE 10 2016 203 874 A1 zeigt eine angetriebene Radeinheit mit einem Elektromotor, der an eine Planetengetriebeanordnung gekoppelt ist.

Aufgabe der vorliegenden Erfindung ist es, eine Achsendanordnung bereitzustellen, welche eine hohe Betriebssicherheit gewährleistet und gleichzeitig einfach und mit wenigen Arbeitsschritten an einem Fahrzeug installiert werden kann und von diesem wieder demontiert werden kann.

Diese Aufgabe wird gelöst mit einer Achsendanordnung gemäß Anspruch 1. Weitere Vorteile und Merkmale der vorliegenden Erfindung ergeben sich aus den abhängigen Ansprüchen.

Erfindungsgemäß weist die Achsendanordnung eine Statoreinheit und eine Rotoreinheit auf, wobei die Statoreinheit gegen Rotation um eine Stummelachse relativ zu einem Achsstummel gesichert festlegbar ist, wobei die Rotoreinheit mittelbar oder unmittelbar an einer Nabe festlegbar ist, wobei die Statoreinheit eine Spulenanordnung aufweist, in welcher bei Rotation der Rotoreinheit eine Spannung erzeugt wird, wobei die Rotoreinheit einen senkrecht zur Stummelachse gemessenen maximalen Außenradius aufweist, der kleiner ist als der kleinste Abstand eines Befestigungsbereiches für ein Fahrzeugrad an der Nabe von der Stummelachse. Die Achsendanordnung weist mit anderen Worten einen feststehenden Teil, die Statoreinheit, und einen gemeinsam mit der Nabe und dem Fahrzeugrad des Fahrzeuges rotierenden Teil, die Rotoreinheit, auf. Dabei weist die Rotoreinheit einen Außenradius auf, der kleiner ist als der Befestigungsbereich für ein Fahrzeugrad, und insbesondere bevorzugt kleiner ist als eine am Fahrzeugrad vorgesehene Aussparung. Auf diese Weise kann das Fahrzeugrad über die Rotoreinheit hinweg zur Nabe hingeführt werden und an der Nabe festgelegt werden. Weiterhin bevorzugt weist die Statoreinheit eine Spulenanordnung auf, welche zur Induktion einer Spannung bei Rotation der Rotoreinheit eingesetzt wird. Es versteht sich in diesem Zusammenhang, dass bei Anlegen einer Spannung an die Spulenanordnung der Statoreinheit auch ein Antriebsmoment auf die Rotoreinheit übertragen werden kann. Der Achsstummel ist vorzugsweise ein einzelner Achsstummel, welcher beispielsweise bei einer gelenkten Achse zum Einsatz kommt. Alternativ bevorzugt ist der Achsstummel das Achsende eines starren Achsrohres, an welchem die Radlager, insbesondere bevorzugt Kegelrollenlager, festgelegt sind. Der Achsstummel ist dabei vorzugsweise hohl ausgeführt, um eine elektrische Leitung zur Spulenanordnung hinführen zu können und das Gewicht der Achsenanordnung zu senken. Der Verbund aus Statoreinheit und Rotoreinheit, welche eine gemeinsame, und aneinander festgelegte Einheit ausbilden und deren Anordnung an der Nabe des Fahrzeuges derart ist, dass das Fahrzeugrad sich auch über die Achsendanordnung hinweg von der Nabe demontieren lässt, sorgt für eine hohe Betriebssicherheit, da die Achsendanordnung nicht geöffnet oder teilweise demontiert werden muss. Weiterhin wird hierdurch eine Vereinfachung der Montage gewährleistet, da für einen Wechsel des Fahrzeugrades die Achsendanordnung nicht vom Fahrzeug demontiert werden muss. Weiterhin bevorzugt muss auch für eine Demontage der Achsendanordnung nicht das Fahrzeugrad abgenommen werden.

Vorzugsweise weist die Rotoreinheit zumindest einen Magneten auf. Um in der Spulenanordnung des Statoreinheit eine Spannung zu induzieren, ist bevorzugt an der Rotoreinheit ein Magnet vorgesehen. Besonders bevorzugt ist eine Vielzahl von Magneten gleichmäßig über den Umfang eines jeweils innerhalb der Spulenanordnung rotierenden Bauteils verteilt angeordnet. Die Verwendung von Dauermagneten hat den Vorteil, dass diese anders als Spulen nicht mit einer elektrischen Spannung versorgt werden müssen, sondern permanent ein magnetisches bzw. elektrisches Feld erzeugen, welches bei Rotation wiederum eine Spannung in der Spulenanordnung induziert.

Erfindungsgemäß weist die Rotoreinheit ein erstes Rotorelement und zweites Rotorelement auf, wobei das erste Rotorelement an der Nabe festlegbar oder bevorzugt festgelegt ist, wobei das zweite Rotorelement im Wesentlichen innerhalb des ersten Rotorelements und innerhalb der Spulenanordnung angeordnet ist. Die Rotoreinheit weist somit ein erstes Rotorelement auf, welches primär der Festlegung an der Nabe dient und ein zweites Element, welches innerhalb der Spulenanordnung derart rotiert, dass in der Spule eine elektrische Spannung induziert wird. Das erste Rotorelement ist dabei vorzugsweise topfförmig ausgebildet und spannt gleichzeitig einen abgeschlossenen Raum gemeinsam mit der Nabe auf, sodass das Eindringen von Schmutz und Fremdkörpern sowie Flüssigkeiten in das Innere der Achsendanordnung verhindert wird.

Vorzugsweise sind das erste Rotorelement und das zweite Rotorelement über ein Getriebe miteinander gekoppelt. In diesem bevorzugten Fall ist somit das zweite Rotorelement drehbar relativ zum ersten Rotorelement angeordnet, wobei zwischen den Rotorelementen ein Getriebe vorgesehen ist. Als Getriebe kann vorzugsweise eine Zahnradanordnung zum Einsatz gelangen, welche die geringere Drehzahl des ersten Rotorelements in eine höhere Drehzahl des zweiten Rotorelements wandelt. Auf diese Weise kann die Leistungsausbeute des durch das zweite Rotorelement und die Spulenanordnung gebildeten Generators erhöht werden. Weiterhin bevorzugt kann bei einem alternativen Einsatz der Achsendanordnung als Antrieb für das Fahrzeugrad bereits bei einer geringen an dem aus Spulenanordnung und zweitem Rotorelement gebildeten Motor angelegten elektrischen Leistung ein großes Drehmoment auf das Fahrzeugrad übertragen werden, um insbesondere bei geringen Drehzahlen des Fahrzeugrades eine zusätzliche Unterstützung zur Fortbewegung des Fahrzeuges zu erreichen. Diese Möglichkeit, ein Drehmoment auf ein Fahrzeugrad gezielt zu übertragen, ist insbesondere bevorzugt für Nutzfahrzeuge geeignet, die in unwegsamem Gelände unterwegs sind, an.

Besonders bevorzugt liegt das Übersetzungsverhältnis des Getriebes zwischen 2 und 12, vorzugsweise zwischen 4 und 10 und besonders bevorzugt bei ca. 6 bis 8, wobei am zweiten Rotorelement eine höhere Drehzahl anliegt als am ersten Rotorelement. Mit anderen Worten rotiert somit gemeinsam mit dem ersten Rotorelement auch die Nabe des Fahrzeuges langsamer als das durch das Getriebe angetriebene zweite Rotorelement. Auf diese Weise kann die Achsendanordnung insbesondere für induktive Bremsvorgänge genutzt werden, indem an der Spulenanordnung eine ausreichend hohe elektrische Leistung abgenommen wird. Das Getriebe mit einem Übersetzungsverhältnis von mindestens 2 und bevorzugt 4 bis 6 sorgt dafür, dass die Rotationsgeschwindigkeit des zweites Rotorelements ein Vielfaches der Rotationsgeschwindigkeit des Fahrzeugrades ist. Dank der hohen Rotationsgeschwindigkeiten im dem durch zweites Rotorelement und Spulenanordnung definierten Generator, ist es möglich, die erforderliche Leistung bereits im Niedervoltbereich bereitzustellen. Der Niedervoltbereich, das bedeutet vorzugsweise ein Spannungsbereich zwischen 12V und 60V, zeichnet sich dadurch aus, dass nur sehr geringe Sicherheitsvorkehrungen für Arbeiten an der elektrischen Anlage erforderlich sind, da nur geringe Verletzungsgefahr bei Arbeiten mit diesen Spannungen besteht. Besonders bevorzugt erzeugt der Generator eine Spannung von 48V, welche mit Vorteil ohne weitere Transformation im Bordnetz eines Nutzfahrzeuges Verwendet werden kann. Durch die Verwendung eines Getriebes mit einer Übersetzungszahl von größer 4 kann die Radendanordnung besonders kompakt ausgelegt werden, da durch die höheren Generatordrehzahlen eine große Leistungsdichte erreicht wird. Hierdurch wird zum einen das Gewicht gesengt und somit unmittelbar die ungefederte Masse der Radaufhängung reduziert. Weiterhin kann der Bauraumbedarf der Achsendanordnung gesenkt werden. Das bevorzugte Übersetzungsverhältnis von 6 - 8 stellt dabei den besten Kompromiss aus hohen Generatordrehzahlen und gleichzeitig geringen Reibungsverlusten im Getriebe dar.

Besonders bevorzugt ist das Getriebe als Umlaufrädergetriebe ausgebildet, wobei an der Statoreinheit ein Hohlrad des Getriebes ausgebildet oder festgelegt ist, wobei am ersten Rotorelement zumindest ein Umlaufrad drehbar festgelegt ist, und wobei das Umlaufrad über eine Verzahnung mit dem zweiten Rotorelement verbunden oder in Eingriff bringbar ist. Ein Umlaufrädergetriebe, auch Planetengetriebe genannt, eignet sich insbesondere zur kompakten und sicheren Kraftübertragung bei einem langsam rotierenden oder feststehenden äußeren Rotorteil und einer vorzugsweise koaxial zu diesem äußeren Rotor angeordneten Welle. Der Vorteil des Umlaufrädergetriebes ist, dass die beiden Rotationsachsen des ersten Rotorelements und des zweiten Rotorelements in diesem Fall koaxial zueinander stehen können, wobei zur Kraftübertragung ein oder eine Vielzahl von Umlaufrädern vorgesehen ist. An der Statoreinheit ist mit Vorteil ein Hohlrad ausgebildet, welches eine Innenverzahnung aufweist, wobei ein am ersten Rotorelement drehbar gelagertes Umlaufrad in diese Innenverzahnung des Hohlrades eingreift. Gleichzeitig steht das Umlaufrad über eine Verzahnung mit dem zweiten Rotorelement in Eingriff, sodass eine Rotation des ersten Rotorelements relativ zum Hohlrad der Statoreinheit eine Rotation des zweiten Rotorelements verursacht. Mit Umlaufrädergetrieben lassen sich insbesondere bevorzugt die großen Übersetzungsverhältnisse von bis zu 10 bis 12 bei besonders kompakter Bauweise erreichen.

Besonders bevorzugt weist das zweite Rotorelement ein Scheibenelement und eine Rotorwelle auf, wobei die Rotorwelle eine Außenverzahnung zum Eingriff mit dem Umlaufrad aufweist. An dem Scheibenelement des zweiten Rotorelements ist vorzugsweise eine Vielzahl der bereits zuvor beschriebenen Dauermagneten festgelegt. Besonders bevorzugt können die Dauermagneten von dem vorzugsweise metallischen Herstellungsmaterial des Scheibenelements umgossen sein. Die Rotorwelle überbrückt den axialen Versatz längs der Stummelachse zwischen dem Eingriffsbereich des Umlaufrades und dem innerhalb der Spulenanordnung gebildeten Bereich, in welchem das Scheibenelement drehbar gelagert ist. Mit Vorteil ist dabei die Länge der Rotorwelle nur ein 0,5- bis 0,8-faches des bereits zuvor beschriebenen maximalen Außenradius der Rotoreinheit. Durch diese kompakte Ausbildung der Rotorwelle lässt sich insgesamt eine kompakte Ausbildung der gesamten Achsendanordnung erreichen.

Besonders bevorzugt ist dabei das zweite Rotorelement über Wälzlager an der Statoreinheit und/oder an dem ersten Rotorelement drehbar gelagert. Um eine besonders stabile Lagerung des zweiten Rotorelements zu gewährleisten, ist dieses besonders bevorzugt sowohl an der Statoreinheit als auch an dem ersten Rotorelement drehbar gelagert. Hierfür kommen insbesondere bevorzugt Wälzlager, besonders bevorzugt Kugellager, zum Einsatz. Die Wälzlager sind dabei insbesondere auch dafür geeignet, neben der Stützkraft senkrecht zur Stummelachse auch eine axiale Kraftkomponente längs der Stummelachse zu übertragen, um die Rotorwelle in der richtigen axialen Position relativ zum ersten Rotorelement und relativ zur Statoreinheit zu halten.

Erfindungsgemäß weist das erste Rotorelement einen Flanschabschnitt auf, wobei der Flanschabschnitt Aussparungen oder Eingriffsbereiche für den Eingriff von Befestigungsmitteln aufweist, welche mit der Nabe in Eingriff bringbar sind. Besonders bevorzugt weist der Flanschabschnitt am ersten Rotorelement somit die geeignete Eingriffsgeometrie zur Festlegung des ersten Rotorelements über Schrauben oder Schraubbolzen, welche mit Muttern in Eingriff bringbar sind, an der Nabe auf. Besonders bevorzugt ist der Flanschabschnitt dabei mit einem Außenradius ausgestattet, welcher kleiner als ein 0,9-Faches des kleinsten Innenradius des Befestigungsbereiches der Nabe ist. Mit Vorteil ist der Flanschabschnitt an der offenen Seite des vorzugsweise topfförmigen ersten Rotorelements ausgebildet, sodass die Länge der Bolzen zur Befestigung des ersten Rotorelements vergleichsweise kurz ist.

Erfindungsgemäß bildet das erste Rotorelement gemeinsam mit der Nabe ein Gehäuse, wobei innerhalb des Gehäuses die Statoreinheit und das zweite Rotorelement angeordnet sind. Besonders bevorzugt bildet der Verbund aus erstem Rotorelement und Nabe ein geschlossenes Gehäuse bzw. einen geschlossenen Hohlraum, innerhalb dessen sowohl das Getriebe als auch die Statoreinheit und die Spulenanordnung und die übrigen, rotierenden Bauteile der Rotoreinheit vorgesehen sind. Auf diese Weise kann die Lebensdauer der Achsendanordnung erhöht werden, da das Eindringen von Schmutz und Fremdkörpern wirksam verhindert werden kann. Mit Vorteil ist zwischen dem ebenfalls innerhalb der Nabe angeordneten Lagerbereich, in welchem die Radlagerung gewährleistet wird, und dem vom ersten Rotorelement und der Nabe aufgespannten Gehäuse eine Lamellendichtung vorgesehen, um einen Austausch von Schmiermittel zwischen der Achsendanordnung und dem Lagerbereich zu verhindern.

Besonders bevorzugt weist der Achsstummel eine Bohrung auf, durch welche hindurch eine elektrische Leitung zur Spulenanordnung führbar oder gelegt ist. Die Bohrung des Achsstummels gewährleistet dabei zum einen, dass im nicht rotierenden Teil der Achsendanordnung eine elektrische Leitung verlegt werden kann und zum anderen sorgt sie für eine Gewichtsminimierung am Achsstummel. Die Verwendung einer elektrischen Leitung zur elektrischen Anbindung der Spulenanordnung weist gegenüber einer Schleifkontaktübertragung den Vorteil geringerer Reibungsverluste und Verschleiß auf.

Mit Vorteil ist die Statoreinheit mit einer Achsmutter derart in formschlüssigen Eingriff bringbar, dass die Statoreinheit gegen Rotation um die Stummelachse gesichert ist. Auf besonders einfache Weise kann die Statoreinheit formschlüssig mit einer ohnehin vorhandenen Achsmutter eines Radlagersystems in Eingriff gebracht werden, wobei die Statoreinheit gemeinsam mit der Achsmutter gegen Rotation gesichert ist. Das Anzugsdrehmoment der Achsmutter ist mit Vorteil ein Vielfaches, bevorzugt ein 5- bis 50-faches des auf die Statoreinheit von der Rotoreinheit übertragenen Drehmoment. Besonders bevorzugt ist es dabei, dass das zweite Rotorelement innerhalb der Statoreinheit in der Richtung rotiert, in welcher die Achsmutter zugespannt wird, wobei das zwischen dem zweiten Rotorelement und der Statoreinheit übertragene Drehmoment somit vorzugsweise kein versehentliches Öffnen oder Aufdrehen der Achsmutter zur Folge haben kann. Dennoch ist bevorzugt, dass die Achsmutter mit aus dem Stand der Technik bekannten Mitteln gegen Verdrehung relativ zum Achsstummel gesichert ist.

Besonders bevorzugt weist die Statoreinheit einen Haltebereich mit einer Innensechskantgeometrie auf. Insbesondere zum Eingriff mit einer Achsmutter weist die Statoreinheit einen Haltebereich auf, welcher eine Innensechskantgeometrie aufweist. Alternativ bevorzugt steht die Innensechskantgeometrie des Haltebereiches mit einem entsprechend sechseckig ausgeführten Vorsprung am Achsstummel selbst in Eingriff, sodass die Statoreinheit nicht an der Achsmutter, sondern unmittelbar am Achsstummel festgelegt ist. Alternativ ist es bevorzugt, an der Stirnseite des Achsstummels eine innensechkantförmige oder sternförmige Aussparung vorzugsehen, in welche die Statoreinheit mit einem entsprechend sechskant- oder sternförmigen Haltebereich eingreift.

Besonders bevorzugt ist die Statoreinheit im Wesentlichen von der Rotoreinheit gegen Verlagerung längs der Stummelachse relativ zum Achsstummel gesichert. Mit anderen Wort ist somit die Statoreinheit auf den Achsstummel oder die Achsmutter nur längs der Stummelachse aufgesteckt, wobei eine Verlagerungssicherung der Statoreinheit längs der Stummelachse durch entsprechende Eingriffsgeometrien der Rotoreinheit und der Statoreinheit gewährleistet wird. Im vorliegenden Fall wird insbesondere über die Wälzlager, welche zwischen dem ersten Rotorelement, dem zweiten Rotorelement und der Statoreinheit angeordnet sind, diese axiale Erhaltungskraft übertragen. Denkbar ist jedoch auch, dass Axialrollenlager zum Einsatz gelangen, welche eine abstützende Kraft längs der Stummelachse von der Rotoreinheit auf die Statoreinheit übertragen. Die Haltekraft in axialer Richtung der Achsendanordnung wird somit vorzugsweise durch die Anbindung des ersten Rotorelements an der Nabe erzeugt.

Mit Vorteil wird in der Spulenanordnung eine Spannung im Niedervoltbereich erzeugt. Mit Vorteil kann aufgrund der im Vergleich zur Drehgeschwindigkeit des Fahrzeugrades sehr hohen Drehgeschwindigkeit des zweiten Rotorelements, bei gleicher Leistung eine geringere Spannung in der Spulenanordnung erzeugt werden. Mit anderen Worten ist bei gleicher, niedriger Spannung im Niedervoltbereich mit der Achsendanordnung eine größere Leistung erzeugbar, als dies aus dem Stand der Technik bekannt ist.

Weitere Vorteile und Merkmale der vorliegenden Erfindung ergeben sich aus der nachfolgenden Beschreibung mit Bezug auf die beigefügte Figur.

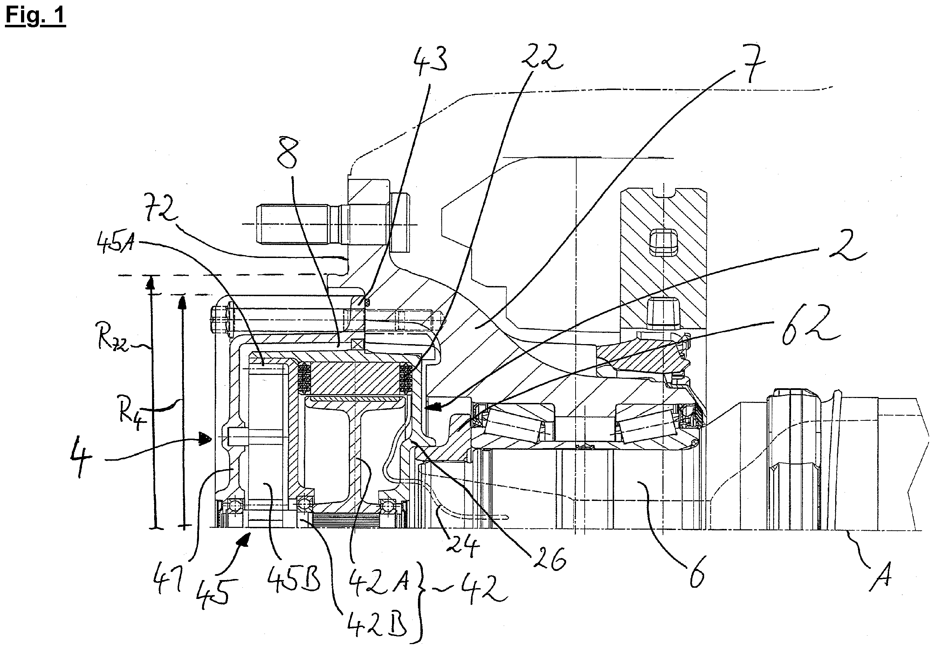

Figur 1 zeigt eine Schnittansicht durch eine bevorzugte Ausführungsform einer erfindungsgemäßen Achsendanordnung. An einem Achsstummel 6 ist eine Nabe 7 drehbar über Kegelrollenlager gelagert. Die Nabe 7 weist einen Befestigungsbereich 72 für ein Fahrzeugrad auf, wobei in diesem Befestigungsbereich 72 beispielsweise ein Radbolzen durch einen entsprechenden Flanschabschnitt gesteckt ist, an welchem eine Radmutter festgeschraubt werden kann, um das Fahrzeugrad (nicht gezeigt) an der Nabe 7 festzulegen. Der Befestigungsbereich 72 weist einen minimalen Abstand R₇₂ von der Stummelachse A auf, welcher im vorliegenden Fall, da der Befestigungsbereich 72 rotationssymmetrisch ausgebildet ist, vorzugsweise der Innenradius des Befestigungsbereiches 72 ist. Mit Vorteil ist eine Rotoreinheit 4 vorgesehen, welche sich aus einem ersten Rotorelement 41 und einem zweiten Rotorelement 42 zusammensetzt. Die Rotoreinheit 4 weist einen maximalen Außenradius R₄ auf, welcher kleiner ist als der minimale Abstand R₇₂ des Befestigungsbereiches 72 von der Stummelachse A. Hierdurch ist es möglich, zum einen das Fahrzeugrad über die Rotoreinheit 4 hinweg an die Achse hinzuführen und von der Achse wieder zu entfernen, und zum anderen ist es auch möglich, bei installiertem Fahrzeugrad die Rotoreinheit von der Nabe 7 zu demontieren. Innerhalb des ersten Rotorelements 41 ist vorzugsweise ein Getriebe 45 vorgesehen, wobei dieses Getriebe 45 als Umlaufrädergetriebe ausgebildet ist. Dabei ist an der Statoreinheit 2 ein Hohlrad 45A ausgebildet, in welches ein Umlaufrad 45B über eine Verzahnung eingreift. Das Umlaufrad 45B ist dabei wiederum an dem ersten Rotorelement 41 drehbar gelagert, wobei eine Rotation des ersten Rotorelements 41 gemeinsam mit der Nabe 7 somit eine Drehbewegung des Umlaufrades 45B relativ zum ersten Rotorelement 41 bewirkt. Das Umlaufrad 45B steht über eine Verzahnung mit einer Rotorwelle 42B des zweiten Rotorelements 42 in Eingriff. Die Rotorwelle 42B ist drehbar sowohl am ersten Rotorelement 41 als auch an der Statoreinheit 2 über Wälzlager, vorzugsweise Kugellager, gelagert. Die Rotorwelle 42B ist darüber hinaus über eine Außenverzahnung drehfest mit einem Scheibenelement 42A verbunden, sodass eine Rotation der Rotorwelle 42B unmittelbar in eine Rotation des Scheibenelements 42A gewandelt wird. Am Scheibenelement 42A ist vorzugsweise ein Magnet, besonderes bevorzugt eine Vielzahl von Dauermagneten angeordnet und festgelegt. Das Scheibenelement 42A rotiert dabei vorzugsweise innerhalb eines von einer Spulenanordnung 22 aufgespannten zylinderförmigen Hohlraumes. Die Rotation des Scheibenelements 42A und der Dauermagnete innerhalb der Spulenanordnung 22 induziert dabei vorzugsweise eine elektrische Spannung, welche über die elektrische Leitung 24 durch eine Aussparung am Achsstummel hindurch abgeführt werden kann und somit insbesondere bevorzugt zum Laden einer Batterie oder zur Versorgung von Zusatzgeräten des Nutzfahrzeuges verwendet werden kann. Das erste Rotorelement 41 weist einen Flanschabschnitt 43 auf, in welchem ein vorzugsweise als Schraubbolzen ausgeführtes Befestigungsmittel in Eingriff gebracht werden kann. Es versteht sich dabei, dass vorzugsweise eine Vielzahl von gleichmäßig über den Umfang des ersten Rotorelements 41 verteilten Befestigungselementen jeweils am Flanschabschnitt 43 in entsprechende Bohrungen eingeführt und mit der Nabe 7 in Eingriff gebracht werden kann. Besonders bevorzugt ist die Statoreinheit 2 über einen Haltebereich 26 formschlüssig gegen Verdrehung relativ zu einer Achsmutter 62 und zum Achsstummel 6 gesichert. Dabei ist die Statoreinheit 2 vorzugsweise lediglich längs der Stummelachse in der in der Figur nach rechts weisenden Richtung auf die Achsmutter 62 aufgesteckt und wird gegen Verlagerung relativ zum Achsstummel 6 und relativ zur Nabe 7 lediglich durch die axiale Haltekraft gesichert, welche durch das erste Rotorelement und die entsprechenden als Kugellager ausgebildeten Wälzlager zwischen der Rotorwelle 42B und der Statoreinheit 2 übertragen wird, gesichert.

### Bezugszeichen:

- 2: - Statoreinheit
- 22: - Spulenanordnung
- 24: - elektrische Leitung
- 26: - Haltebereich
- 4: - Rotoreinheit
- 41: - erstes Rotorelement
- 42: - zweites Rotorelement
- 42A: - Scheibenelement
- 42B: - Rotorwelle
- 43: - Flanschabschnitt
- 45: - Getriebe
- 45A: - Hohlrad
- 45B: - Umlaufrad
- 6: - Achsstummel
- 62: - Achsmutter
- 7: - Nabe
- 72: - Befestigungsbereich
- 8: - Gehäuse
- A: - Stummelachse
- R₄: - maximaler Außenradius Rotoreinheit
- R₇₂: - kleinster Abstand Befestigungsabschnitt

## Patentansprüche

1. Achsendanordnung, insbesondere zum Einsatz in Nutzfahrzeugen, aufweisend eine Statoreinheit (2) und eine Rotoreinheit (4),
wobei die Statoreinheit (2) gegen Rotation um eine Stummelachse (A) relativ zu einem Achsstummel (6) gesichert festlegbar ist,
wobei die Rotoreinheit (4) mittelbar oder unmittelbar an einer Nabe (7) festlegbar ist,
wobei die Statoreinheit (2) eine Spulenanordnung (22) aufweist, in welcher bei Rotation der Rotoreinheit (4) eine Spannung erzeugt wird,
wobei die Rotoreinheit (4) ein erstes Rotorelement (41) und ein zweites Rotorelement (42) aufweist,
wobei das erste Rotorelement (41) an der Nabe (7) festlegbar ist,
wobei das zweite Rotorelement (42) innerhalb des ersten Rotorelements (41) gelagert und innerhalb der Spulenanordnung (22) angeordnet ist,
wobei das erste Rotorelement (41) einen Flanschabschnitt (43) aufweist, wobei der Flanschabschnitt (43) Aussparungen für den Eingriff von Befestigungsmitteln aufweist, welche mit der Nabe (7) in Eingriff bringbar sind, wobei das erste Rotorelement (41) gemeinsam mit der Nabe (7) ein Gehäuse (8) bildet, und
wobei innerhalb des Gehäuses (8) die Statoreinheit (2) und das zweite Rotorelement (42) angeordnet sind,
**dadurch gekennzeichnet, dass** die Rotoreinheit (4) einen senkrecht zur Stummelachse (A) gemessenen maximalen Außenradius (R₄) aufweist, der kleiner ist als der kleinste Abstand (R₇₂) eines Befestigungsbereiches (72) für ein Fahrzeugrad an der Nabe (7) von der Stummelachse (A).

2. Achsendanordnung nach Anspruch 1,
wobei das erste Rotorelement (41) und das zweite Rotorelement (42) über ein Getriebe (45) miteinander gekoppelt sind.

3. Achsenanordnung nach Anspruch 2,
wobei das Übersetzungsverhältnis des Getriebes (45) zwischen 2 und 12, vorzugsweise zwischen 4 und 10, und besonders bevorzugt bei ca. 6 bis 8 liegt,
wobei am zweiten Rotorelement (42) eine höhere Drehzahl anliegt als am ersten Rotorelement (41).

4. Achsenanordnung nach einem der Ansprüche 2 oder 3,
wobei das Getriebe (45) als Umlaufrädergetriebe ausgebildet ist,
wobei an der Statoreinheit (2) ein Hohlrad (45A) des Getriebes (45) ausgebildet oder festgelegt ist,
wobei am ersten Rotorelement (41) zumindest ein Umlaufrad (45B) drehbar festgelegt ist,
wobei das Umlaufrad (45B) über eine Verzahnung mit dem zweiten Rotorelement (42) verbunden oder in Eingriff bringbar ist.

5. Achsendanordnung nach Anspruch 4,
wobei das zweite Rotorelement (42) ein Scheibenelement (42A) und eine Rotorwelle (42B) aufweist,
wobei die Rotorwelle (42B) eine Außenverzahnung zum Eingriff mit dem Umlaufrad (45B) aufweist.

6. Achsendanordnung nach einem der vorhergehenden Ansprüche,
wobei die Statoreinheit (2) mit einer Achsmutter (62) derart in formschlüssigen Eingriff bringbar ist, dass die Statoreinheit (2) gegen Rotation um die Stummelachse (A) gesichert ist.

7. Achsendanordnung nach einem der vorhergehenden Ansprüche,
wobei die Statoreinheit (2) im Wesentlichen von der Rotoreinheit (4) gegen Verlagerung längs der Stummelachse (A) relativ zum Achsstummel (6) gesichert ist.

8. Achsendanordnung nach einem der vorhergehenden Ansprüche,
wobei in der Spulenanordnung (22) eine Spannung im Niedervoltbereich, das heißt in einem Spannungsbereich zwischen 12V und 60V, erzeugt wird.

## Claims

1. An axle end arrangement, in particular for use in utility vehicles,
having a stator unit (2) and a rotor unit (4),
wherein the stator unit (2) can be fixed in a secured manner against rotation about a stub axle (A) relative to an axle stub (6),
wherein the rotor unit (4) can be fixed indirectly or directly on a hub (7), wherein the stator unit (2) has a coil arrangement (22), in which, upon rotation of the rotor unit (4), a voltage is generated,
wherein the rotor unit (4) has a first rotor element (41) and a second rotor element (42),
wherein the first rotor element (41) can be fixed on the hub (7),
wherein the second rotor element (42) is mounted within the first rotor element (41) and is arranged within the coil arrangement (22),
wherein the first rotor element (41) has a flange portion (43),
wherein the flange portion (43) has recesses for the engagement of fastening means which can be brought into engagement with the hub (7),
wherein the first rotor element (41) forms a housing (8) jointly with the hub (7), and
wherein the stator unit (2) and the second rotor element (42) are arranged within the housing (8),
**characterized in that** the rotor unit (4) has a maximum outer radius (R₄) measured perpendicular to the stub axle (A), which outer radius (R₄) is smaller than the smallest distance (R₇₂) of a fastening region (72) for a vehicle wheel on the hub (7) from the stub axle (A),.

2. The axle end arrangement as claimed in claim 1,
wherein the first rotor element (41) and the second rotor element (42) are coupled to one another via a transmission (45).

3. The axle end arrangement as claimed in claim 2,
wherein the transmission ratio of the transmission (45) lies between 2 and 12, preferably between 4 and 10, and particularly preferably at approx. 6 to 8,
wherein there is a higher rotational speed at the second rotor element (42) than at the first rotor element (41).

4. The axle end arrangement as claimed in any one of claims 2 or 3,
wherein the transmission (45) is formed as a planetary gear transmission,
wherein an internal gear (45A) of the transmission (45) is formed or fixed on the stator unit (2),
wherein at least one planetary gear (45B) is fixed rotatably on the first rotor element (41),
wherein the planetary gear (45B) is connected or can be brought into engagement via a toothing with the second rotor element (42).

5. The axle end arrangement as claimed in claim 4,
wherein the second rotor element (42) has a disc element (42A) and a rotor shaft (42B),
wherein the rotor shaft (42B) has an external toothing for engagement with the planetary gear (45B).

6. The axle end arrangement as claimed in any one of the preceding claims,
wherein the stator unit (2) can be brought into positive-locking engagement with an axle nut (62) such that the stator unit (2) is secured against rotation about the stub axle (A).

7. The axle end arrangement as claimed in any one of the preceding claims,
wherein the stator unit (2) is secured substantially by the rotor unit (4) against displacement along the stub axle (A) relative to the axle stub (6).

8. The axle end arrangement as claimed in any one of the preceding claims,
wherein a voltage in the low-voltage range, i.e. in a voltage range between 12V and 60V, is generated in the coil arrangement (22).

## Revendications

1. Ensemble d'extrémité d'essieu, destiné en particulier à être utilisé dans des véhicules utilitaires, comprenant une unité de stator (2) et une unité de rotor (4),
dans lequel
l'unité de stator (2) peut être immobilisée en étant bloquée à l'encontre d'une rotation autour d'un axe de moignon (A) par rapport à un moignon d'essieu (6),
l'unité de rotor (4) peut être immobilisée directement ou indirectement sur un moyeu (7),
l'unité de stator (2) comprend un ensemble de bobines (22) dans lequel une tension est générée lors de la rotation de l'unité de rotor (4),
l'unité de rotor (4) comprend un premier élément de rotor (41) et un second élément de rotor (42),
le premier élément de rotor (41) peut être immobilisé sur le moyeu (7),
le second élément de rotor (42) est monté à l'intérieur du premier élément de rotor (41) et est disposé à l'intérieur de l'ensemble de bobines (22),
le premier élément de rotor (41) comprend une portion de bride (43),
la portion de bride (43) présente des échancrures pour l'engagement de moyens de fixation qui peuvent être amenés en engagement avec le moyeu (7),
le premier élément de rotor (41) constitue un boîtier (8) conjointement avec le moyeu (7), et
l'unité de stator (2) et le second élément de rotor (42) sont disposés à l'intérieur du boîtier (8),
**caractérisé en ce que**
l'unité de rotor (4) présente un rayon extérieur maximum (R₄), mesuré perpendiculairement à l'axe de moignon (A), qui est inférieur à la plus petite distance (R₇₂) d'une zone de fixation (72) pour une roue de véhicule sur le moyeu (7) par rapport à l'axe de moignon (A).

2. Ensemble d'extrémité d'essieu selon la revendication 1,
dans lequel le premier élément de rotor (41) et le second élément de rotor (42) sont couplés l'un à l'autre par un mécanisme de transmission (45).

3. Ensemble d'extrémité d'essieu selon la revendication 2,
dans lequel le rapport de transmission du mécanisme de transmission (45) est compris entre 2 et 12, de préférence entre 4 et 10, et de manière particulièrement préférée entre environ 6 et 8,
une vitesse de rotation plus élevée est appliquée au second élément de rotor (42) qu'au premier élément de rotor (41).

4. Ensemble d'extrémité d'essieu selon l'une des revendications 2 ou 3,
dans lequel le mécanisme de transmission (45) est réalisé sous forme de train épicycloïdal,
une couronne à denture intérieure (45A) du mécanisme de transmission (45) est réalisée ou immobilisée sur l'unité de stator (2),
au moins une roue satellite (45B) est attachée de manière mobile en rotation sur le premier élément de rotor (41),
la roue satellite (45B) est reliée ou peut être amenée en engagement avec le second élément de rotor (42) par l'intermédiaire d'une denture.

5. Ensemble d'extrémité d'essieu selon la revendication 4,
dans lequel le second élément de rotor (42) comprend un élément de disque (42A) et un arbre de rotor (42B),
l'arbre de rotor (42B) présente une denture extérieure pour s'engager avec la roue satellite (45B).

6. Ensemble d'extrémité d'essieu selon l'une des revendications précédentes,
dans lequel l'unité de stator (2) peut être amenée en engagement par coopération de forme avec un écrou d'essieu (62) de telle sorte que l'unité de stator (2) soit bloquée à l'encontre d'une rotation autour de l'axe de moignon (A).

7. Ensemble d'extrémité d'essieu selon l'une des revendications précédentes,
dans lequel l'unité de stator (2) est bloquée à l'encontre d'un déplacement le long de l'axe de moignon (A) par rapport au moignon d'essieu (6) sensiblement par l'intermédiaire de l'unité de rotor (4).

8. Ensemble d'extrémité d'essieu selon l'une des revendications précédentes,
dans lequel une tension dans la plage de basse tension, c'est-à-dire dans la plage de tension comprise entre 12 V et 60 V, est générée dans l'ensemble de bobines (22).
